# EUROPEAN PATENT SPECIFICATION

(11) **EP 2 768 075 B1**
(45) Date of publication and mention of the grant of the patent: **04.11.2020**
(21) Application number: 12839600.9
(22) Date of filing: 06.09.2012
(51) Int. Cl.: H01Q 1/27, H04B 1/3816, H04B 1/3827, H04M 1/05, H04N 13/341, H04N 13/398, G02C 11/00, H01Q 9/16

(54) **WIRELESS COMMUNICATION DEVICE**
DRAHTLOSE KOMMUNIKATIONSVORRICHTUNG
DISPOSITIF DE COMMUNICATION SANS FIL

(30) Priority: 14.10.2011 JP 2011227258
(43) Date of publication of application: 20.08.2014
(73) Proprietor: Sharp Kabushiki Kaisha, Osaka-shi, Osaka 545-8522 (JP)
(72) Inventor: KONDO, Toshinori, Osaka-shi, Osaka 545-8522 (JP)
(74) Representative: Müller Hoffmann & Partner
(86) International application number: PCT/JP2012/072821
(87) International publication number: WO 2013/054618

(56) References cited:
- EP-A1- 0 162 184
- WO-A1-01/06298
- WO-A1-2008/006416
- WO-A1-2012/086619
- WO-A2-2008/002388
- JP-A- H04 211 524
- JP-A- H09 141 372
- JP-A- H09 141 372
- JP-A- H11 234 033
- JP-A- 2000 151 260
- JP-A- 2001 274 605
- JP-A- 2002 214 545
- JP-A- 2007 013 922
- US-A- 5 020 150
- US-A1- 2006 046 795
- US-A1- 2007 046 887

## Description

### Technical Field

The present invention relates to a radio communication device having a directivity in a front surface direction of the face of a user.

### Background Art

In recent years, it has been developed an electronic device having an appearance of glasses such as (i) 3D glasses for watching 3D television or (ii) 3D glasses for enjoying 3D game, or (iii) a glasses-type head mount display. Such an electronic device may include an antenna so as to carry out radio communication.

Examples of a conventional glasses-type radio communication device, having an antenna, encompass a device in which an antenna is provided in a frame of glasses (see Patent Literature 1 or 2). For example, Patent Literature 1 discloses that a lens frame or a temple part of glasses is employed as an antenna. Patent Literature 2 discloses varifocal glasses in which an antenna is provided in a frame.

### Citation List

### Patent Literatures

Patent Literature 1
   Japanese Patent Application Publication, Tokukaihei, No. 11-353444 A (Publication Date: December 24, 1999)
Patent Literature 2
   Japanese Patent Application Publication, Tokukai, No. 2002-214545 A (Publication Date: July 31, 2002)

EP 0 162 184 A1 describes spectacles comprising a supporting frame for the lenses and side pieces hinged to the frame, with at least one of these side pieces carrying an electroacoustic transducer which makes it possible to produce an acoustic power depending on electric signals and which is connected electrically to a generator of electric signals. The spectacles also include, as a generator of electric signals, a receiver of electromagnetic waves incorporated at least partially in the frame and/or the side pieces of the spectacles. The electrical connections between the electric signal generator and electroacoustic transducer or transducers are completely concealed by the frame and the side pieces of the spectacles.

JP 2002-214545 A describes an electric power transmission unit. The electric power transmission unit may be put into a pocket, etc., of clothing and may be put around the user's body or the like. The electric power transmission unit moves a transmission circuit by a power source and emits electromagnetic waves toward variable focus spectacles from a transmission antenna. The variable focus spectacles are provided with a reception antenna at a frame of the spectacles to receive the electromagnetic waves sent from the electric power transmission unit. The electromagnetic waves are, for example, boosted and are subjected to current rectification, by which the driving of the variable focus lenses is made possible.

US 5,020,150 A describes a combination of a radio and eyeglasses including an antenna that is wrapped around the lenses of the eyeglasses and extends across the nose bridge element to obtain improved reception. The radio includes a power source that has a battery and a solar energy converter so the radio can be played for great lengths of time. Earphones are mounted on the skull pieces of the eyeglass frames to be placed in a wearer's ear.

US 2006/0046795 A1 describes a cellular phone suite including a main body and a pair of glasses. The glasses have a frame. The frame has the function of an antenna for wireless communication. The cellular phone further includes a first transceiver and a second transceiver. The first transceiver is mounted on the main body. The second transceiver is mounted on the frame. The first and second transceivers communicate with each other, for establishing the communication between the main body and the frame. Without the extra volume of an antenna, the main body of the cellular phone is convenient to carry.

WO 2008/002388 A2 describes an adapter for a spectacle frame configured for enabling the spectacle frame to operate and control electro-active lenses housed therein. In particular the spectacle frame may allow electro-active lenses housed therein to focus and be controlled both automatically and manually with heretofore unrealized results.

WO 01/06298 A1 describes an integrated method and apparatus for communication. In one embodiment, a head-mounted viewable display system for a user is provided. This system includes eyewear and a micro-optical display. The micro-optical display is positioned in the field of vision of the user and is configured to correct a portion of the refractive error of the user. In another embodiment of the present invention, an integrated communication system is provided. This communication system contains a head mounted frame, a speaker mounted to the frame, a lens mounted to the frame, a micro-optical display having a micro-character display supported by the frame, a microprocessor supported by the frame, and a wireless communication device mounted on the frame, the wireless communication device in communication with the microprocessor. In still another embodiment of the present invention, a method of displaying information to a user is provided. This method includes displaying a first line of characters on a micro-optical display having a micro-character display and using an optical element to project the first line of characters in the field of vision of the user.

WO 2008/006416 A1 describes an RFID transponder, an optical element with an RFID transponder, and an aerial for an RFID transponder. According to the invention, the aerial is constructed to be optically transparent. The invention additionally relates to a method for producing an aerial for an RFID transponder. The inventive method for producing an aerial of an RFID transponder is characterized by the following procedural steps: a) Providing an object to be equipped with the RFID transponder with a surface, b) Application of a transparent conductive coating to the surface, c) Lithographic structuring of the transparent conductive coating in order to form the aerial.

US 2007/0046887 A1 describes techniques for providing eyewear with electrical components. The electrical components can provide electrical technology to eyewear without having to substantially compromise aesthetic design principles of the eyewear. The electrical components can be partially or completely internal to eyewear. The electrical components can also be attached to the eyewear as an after-market enhancement. The electrical components can operate independently or together with other electrical components provided elsewhere.

JP H09 141372 A describes a composite metallic material having a core material composed of a metal and a coating material which is composed of the metal different from the core material and is formed to a wire or band shape and is spirally wound around core material. The core material may be formed of, for example, the superelastic alloy. On the other hand, the coating material may be formed of at least one kind of any among Cu and Cu alloy, Ni and Ni alloy and stainless steels. Further, the coating material is formable to plural pieces of wires and may be wound around the core material in parallel.

### Summary of Invention

### Technical Problem

A video image device has been enlarged in screen. As a video image device has a larger screen, it is preferable for a user to keep a longer distance during watching the video image device. This causes a problem that, as the user is farther from the video image device, a quality of communication may be deteriorated between a glasses-type radio communication device and the video image device.

In a case where a user watches a video image device such as a 3D television by use of a glasses-type radio communication device, the user wears the glasses-type radio communication device and turns his/her face toward the video image device. As such, it is preferable that an antenna, provided in the radio communication device, have a directivity in a front surface direction of the face of the user.

In a case where a glasses-type radio communication device has a monopole antenna which is provided in a rim of or a temple of glasses, it is necessary to optimize (i) a position of a power feeding section and (ii) a position and a shape of a GND (ground), in order for the antenna to have a directivity in a front surface direction of the face of the user wearing the glasses. However, in a case where a radio communication device has a shape of glasses, arrangements of an antenna and a circuit are limited. In a case where a monopole antenna is employed, it is difficult to optimize a position and a shape of a GND. This causes such an antenna to have a problem that the antenna cannot have a unique directivity. Neither Patent Literatures 1 nor 2 disclose a system of an antenna, a position of a power feeding section, a position and a shape of a GND, and the like. It is therefore unclear what directivity a glasses-type radio communication device has.

The present invention has been made in view of the problems, and a primary object of the present invention is to provide a radio communication device having a directivity in a front surface direction of the face of a user.

### Solution to Problem

In order to attain the object, a radio communication device of the present invention is a radio communication device which is to be worn on the head of a user and which is configured to communicate with a video image device as defined in claim 1. The radio communication device includes right and left eyepiece parts; and an antenna for carrying out radio communication, the antenna being a dipole antenna including an antenna element and a power feeding section which supplies electric power to the antenna element, the power feeding section being provided between the right and left eyepiece parts.

With the configuration, in a case where a user wears on his/her head a radio communication device which employs a dipole antenna in which a power feeding section of an antenna is provided between right and left eyepiece parts, it is possible to cause a directivity of the antenna to be in a front surface direction of the face of the user.

In a case where a user uses a radio communication device, a device which communicates with the radio communication device is likely to be located in a front surface direction of the user. Therefore, in a case where a directivity an antenna of the radio communication device is caused to be in a front surface direction of the face of the user, it is possible to improve a communication quality.

### Advantageous Effects of Invention

A radio communication device of the present invention is a radio communication device which is to be worn on the head of a user, includes: right and left eyepiece parts; and an antenna for carrying out radio communication, the antenna being a dipole antenna including an antenna element and a power feeding section which supplies electric power to the antenna element, the power feeding section being provided between the right and left eyepiece parts.

With the configuration, in a case where a user uses a radio communication device which employs a dipole antenna in which a power feeding section of an antenna is provided between right and left eyepiece parts, it is possible to cause a directivity of the antenna to be in a front surface direction of the face of the user, thereby improving a communication quality.

### Brief Description of Drawings

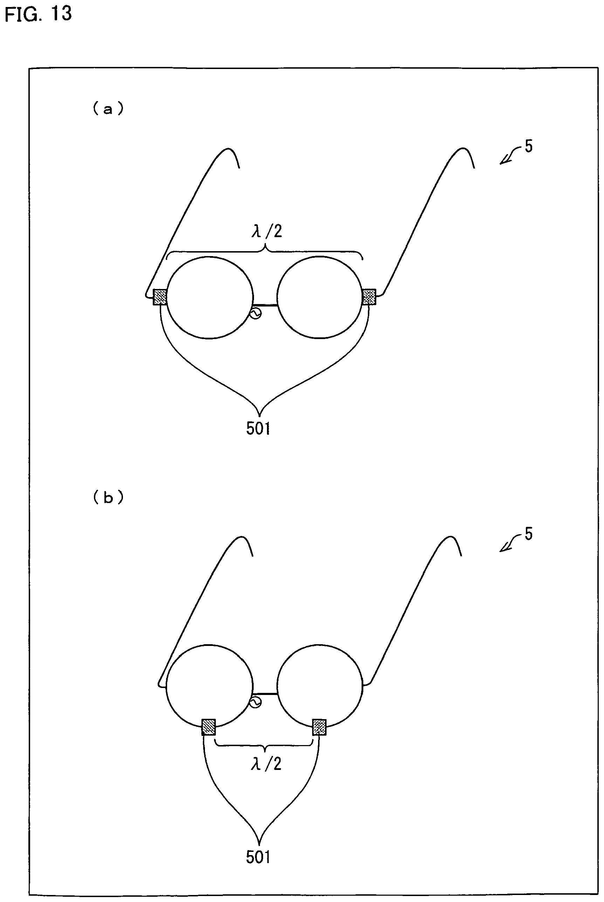

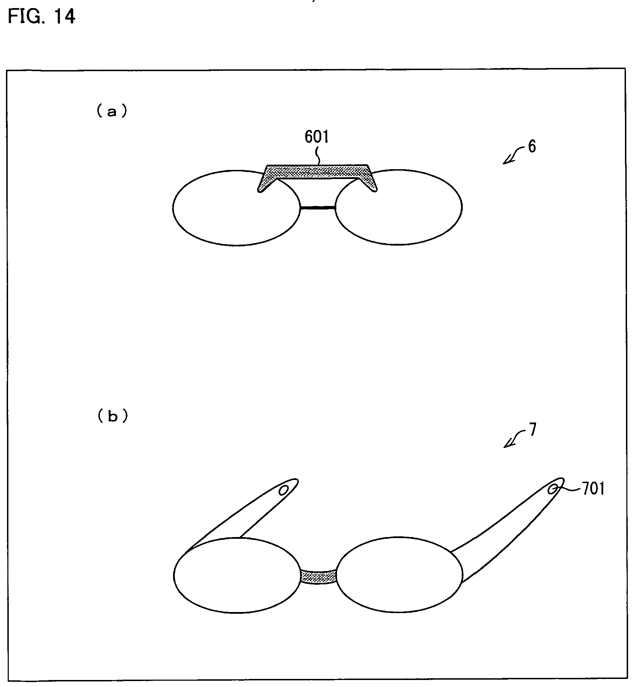

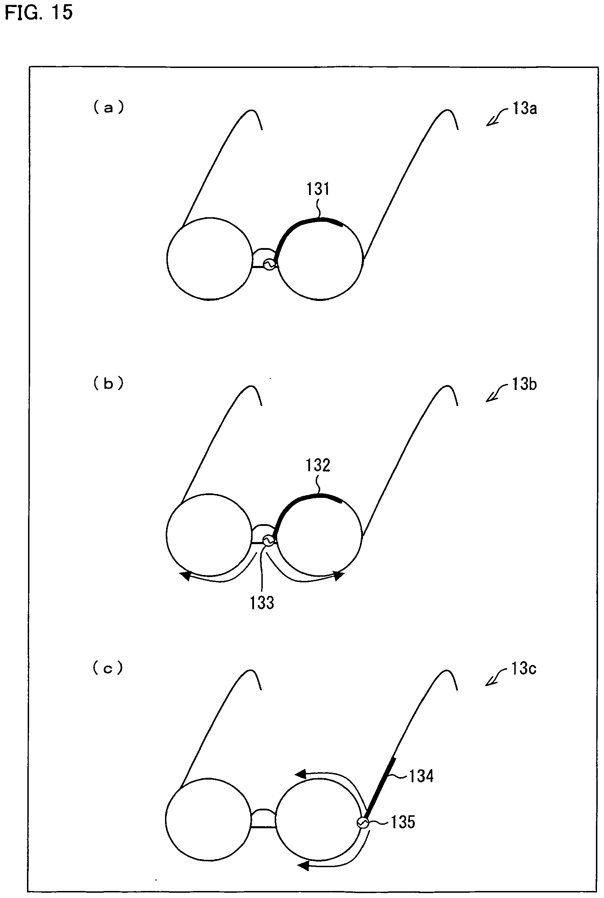

Fig. 1 is a view illustrating an internal configuration of a glasses-type radio communication device of Embodiment 1.
Fig. 2 is a view illustrating a system configuration of a radio communication system.
Fig. 3 is a view schematically illustrating a glasses-type radio communication device.
Fig. 4 is a block diagram illustrating an internal configuration of the glasses-type radio communication device illustrated in Fig. 1.
(a) through (d) of Fig. 5 are each a graph illustrating a directivity of an antenna of the glasses-type radio communication device illustrated in Fig. 1.
(a) and (b) of Fig. 6 are each a view illustrating another internal configuration of the glasses-type radio communication device.
(a) through (c) of Fig. 7 are each a view illustrating a further internal configuration of the glasses-type radio communication device.

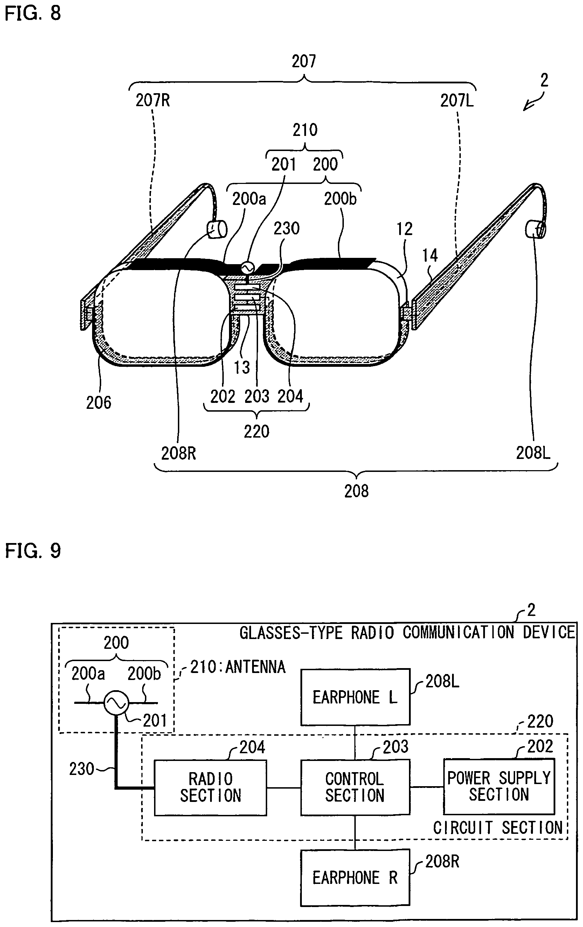

Fig. 8 is a view illustrating an internal configuration of a glasses-type radio communication device of Embodiment 2.
Fig. 9 is a block diagram illustrating the internal configuration of the glasses-type radio communication device illustrated in Fig. 8.

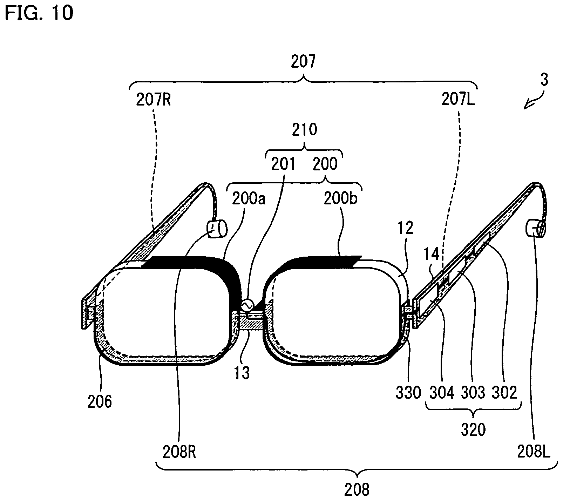

Fig. 10 is a view illustrating another internal configuration of the glasses-type radio communication device.

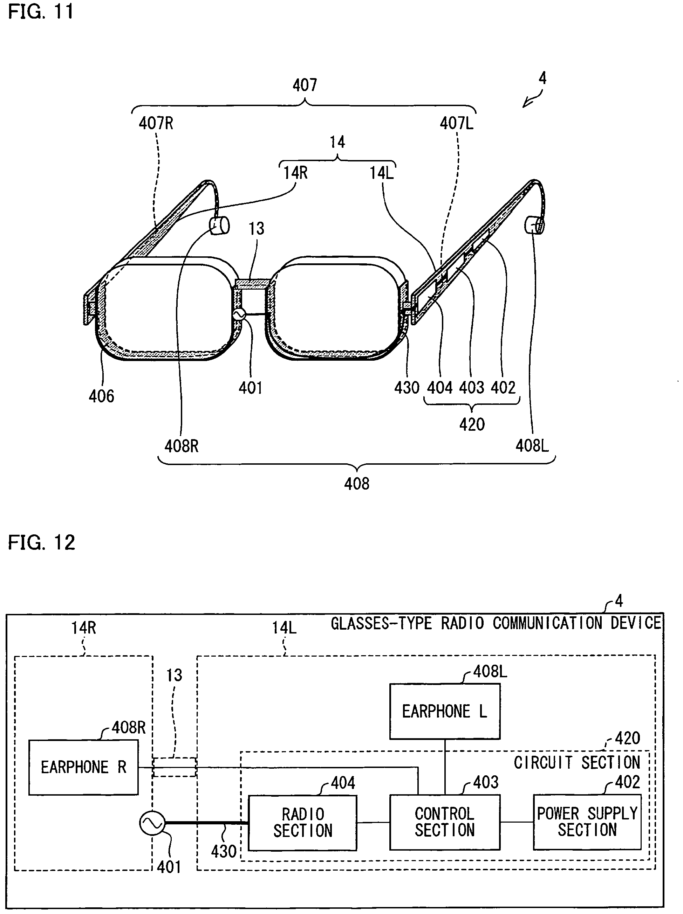

Fig. 11 is a view illustrating an internal configuration of a glasses-type radio communication device of Embodiment 3.
Fig. 12 is a block diagram illustrating the internal configuration of the glasses-type radio communication device illustrated in Fig. 11.
(a) and (b) of Fig. 13 are each a view illustrating a glasses-type radio communication device in which a filter is provided.
(a) and (b) of Fig. 14 are each a view illustrating a radio communication device of Embodiment 4.
(a) through (c) of Fig. 15 are each a view illustrating a radio communication device in which a monopole antenna is provided.

### Description of Embodiments

The following description will specifically discuss embodiments of the present invention. A glasses-type radio communication device of the present invention is not particularly limited, provided that it has an appearance of glasses and carries out radio communication. The glasses-type radio communication device of the present invention is applicable to various uses such as 3D glasses, a head mount display, a headset, a radio receiver, and an individual identification device.

### [Embodiment 1]

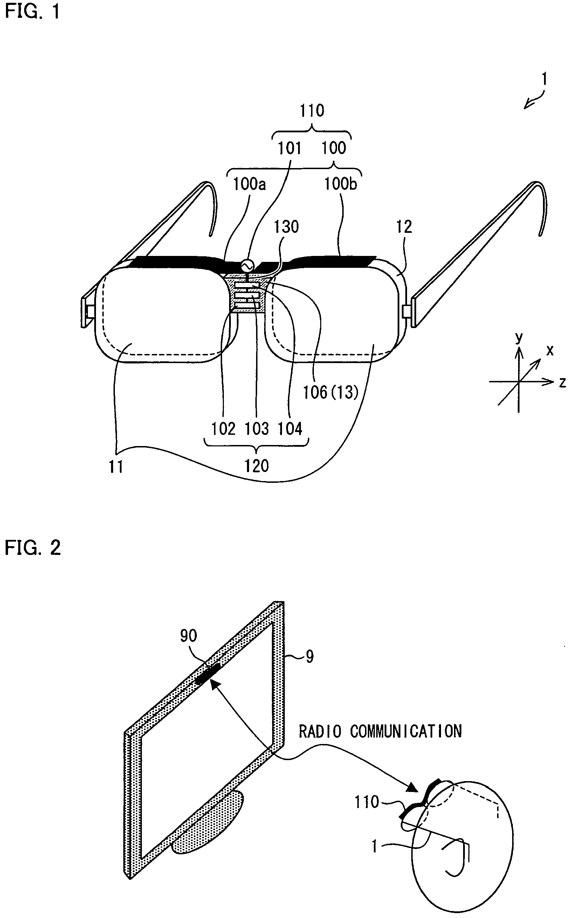

The following description will discuss a first embodiment (Embodiment 1) of the present invention with reference to Figs. 1 through 7.

The following description will first discuss an outline of a radio communication system of Embodiment 1 with reference to Fig. 2. Fig. 2 is a view illustrating a system configuration of the radio communication system of Embodiment 1. The radio communication system includes a glasses-type radio communication device (radio communication device) 1 which is worn by a user and a television receiver (hereinafter referred to as a "television") 9 (see Fig. 2).

The glasses-type radio communication device 1 includes an antenna 110 for communicating with the television 9. The television 9 includes an antenna 90 for communicating with the glasses-type radio communication device 1. The glasses-type radio communication device 1 and the television 9 carry out radio communication via the antenna 110 and the antenna 90.

### (Outline of glasses-type radio communication device 1)

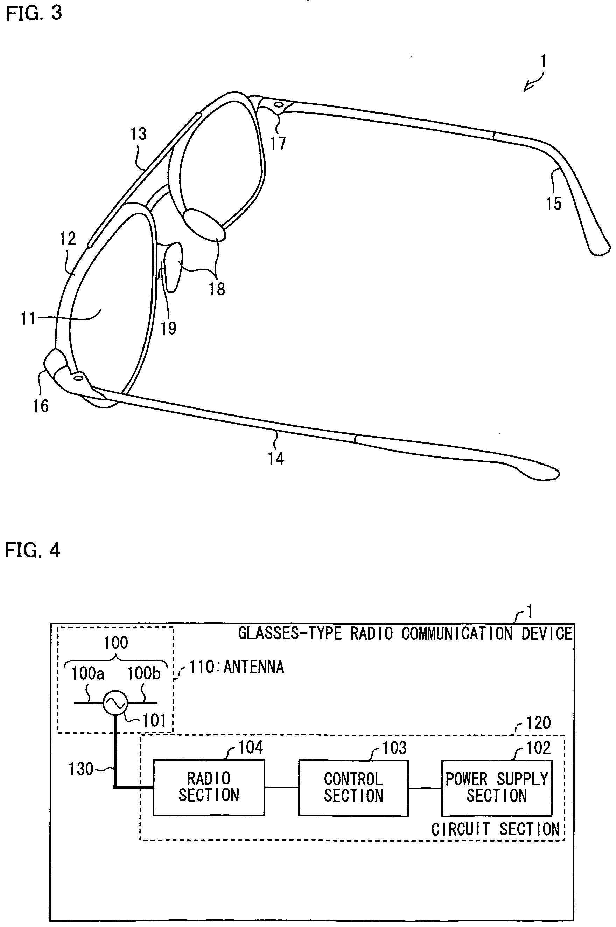

The following description will discuss an outline of the glasses-type radio communication device 1 of Embodiment 1 with reference to Fig. 3. Fig. 3 is a view schematically illustrating the glasses-type radio communication device 1 of Embodiment 1. The glasses-type radio communication device 1 has a shape of glasses and includes an eyepiece part 11, a rim 12, a bridge 13, a temple 14, an end cover 15, an endpiece 16, a hinge 17, a pad 18, a pad arm 19, and the like (see Fig. 3).

The eyepiece part 11 is an optical member provided in front of left or right eye of the user. For example, the eyepiece part 11 is a glasses-type lens.

The rim 12 is a holding member which surrounds and holds the eyepiece part 11. The bridge 13 is a coupling member for coupling right and left eyepiece parts 11.

The bridge 13 couples the right and left eyepiece parts 11 via the rim 12 so that the right and left eyepiece parts 11 are located in a given positional relationship.

The temple 14 is a member including an ear hook and is also referred to as a bow. According to the temple 14, a covering member referred to as an end cover 15 may cover a part which is in contact with an ear of the user.

The endpiece 16 is a connecting member for connecting the eyepiece part 11 with the temple 14. The endpiece 16 is provided in a region along a circumference of the eyepiece part 11. The endpiece 16 can be integrated with the rim 12. Alternatively, the endpiece 16 can be independently combined with the eyepiece part.

The hinge 17 is an opening/closing member for allowing the temple 14 to be foldable with respect to the eyepiece part 11 etc. The hinge 17 is provided between the endpiece 16 and the temple 14.

The pad 18 is a member to be in contact with the nose of the user.

The pad arm 19 is a coupling member for coupling the pad 18 and the eyepiece part 11. The pad arm 19 couples the pad 18 and the eyepiece part 11 via the rim 12 so that the pad 18 and the eyepiece part 11 are located in a given positional relationship. Note that the glasses-type radio communication device 1 not necessarily includes pad arms 19. In that case, the pad 18 and the eyepiece part 11 or the rim 12 can be directly combined with each other.

Note that, each component of the glasses-type radio communication device 1 can be constituted by, for example, a material identical to that of general glasses. However, the each component is not limited to this. For example, an insulator such as plastic (e.g., epoxy resin, celluloid, acetate, or a polyamide) can be employed as materials of the rim 12 and the temple 14. However, the materials of the rim 12 and the temple 14 are not limited to this. For example, an electric conductor such as metal (e.g., titanium, a titanium alloy, an aluminum alloy, a magnesium alloy, a nickel chrome alloy, or stainless steel) can be employed as a material of the bridge 13. However, the material of the bridge 13 is not limited to this.

Note that, according to Embodiment 1, components, such as the rim 12, the bridge 13, and the temple 14, which support the eyepiece part, are referred to as a "frame".

### (Internal configuration of glasses-type radio communication device 1)

The following description will discuss an internal configuration of the glasses-type radio communication device 1 with reference to Figs. 1 and 4. Fig. 1 is a view illustrating the internal configuration of the glasses-type radio communication device 1. Fig. 4 is a block diagram illustrating the internal configuration of the glasses-type radio communication device 1 illustrated in Fig. 1.

The glasses-type radio communication device 1 includes an antenna 110, a circuit section 120, and a power feeding line 130 which supplies, to the antenna 110, electric power supplied from the circuit section 120 (see Figs. 1 and 4). According to the glasses-type radio communication device 1, the bridge 13 serves as a GND 106. Note that the power feeding line 130 is, for example, a coaxial line, a microstrip line, or the like. However, the power feeding line 130 is not limited to this.

The circuit section 120 comprehensively controls the glasses-type radio communication device 1. Specifically, the circuit section 120 controls communication via the antenna 110. The circuit section 120 includes (i) a power supply section 102 which supplies electric power to the glasses-type radio communication device 1, (ii) a control section 103 which controls an electrical signal, and (iii) a radio section 104 which transmits and receives data via the antenna 110. The circuit section 120 is provided in the GND 106.

The control section 103 controls opening and closing of a shutter (not illustrated) in the eyepiece part 11, while synchronizing a 3D television and the glasses-type radio communication device 1, so that, for example, the user can recognize a video image displayed on the 3D television as a three-dimensional video image. Note that an operation of the control section 103 is not limited to this.

Note that an area, in which the circuit section 120 is provided, is not limited to an area in the bridge 13. Such an area can be provided in the temple 14. The circuit section 120 can thus be provided without considering a directivity of the antenna 110. It is further possible to minimize a region of the GND in which the circuit section 120 is to be provided.

### (Antenna 110)

The antenna 110 is a half-wavelength dipole antenna which includes an antenna element 100 and a power feeding section 101 which supplies electric power to the antenna element 100 (see Fig. 1).

The antenna element 100 is, for example, an electric conductor such as metal (e.g., titanium, a titanium alloy, an aluminum alloy, a magnesium alloy, a nickel chrome alloy, and stainless steel).

The power feeding section 101 is provided in the bridge 13. In other words, the power feeding section 101 is provided between the right and left eyepiece parts 11. The antenna element 100 is provided on either side of the power feeding section 101 along each circumference of the right and left eyepiece parts 11. The antenna element 100 is made up of (i) a first antenna element 100a which extends from the power feeding section 101 along an upper part of the right eyepiece part 11 and (ii) a second antenna element 100b which extends from the power feeding section 101 along an upper part of the left eyepiece part 11. That is, the first antenna element 100a and the second antenna element 100b are provided so as to make a pair and so as to sandwich the bridge 13 therebetween.

The power feeding section 101 electrically connects the power feeding line 130 with the antenna element 100. The power feeding section 101 can be a spring etc. Alternatively, for example, a signal line of a coaxial line can be connected to the power feeding section 101 by soldering. In a case where electric power is supplied from an unbalanced line such as a coaxial line to a balanced antenna such as a dipole antenna, it is necessary to provide a balun which makes a balanced/unbalanced conversion. In that case, the power feeding section 101 can include a matching element such as a balun.

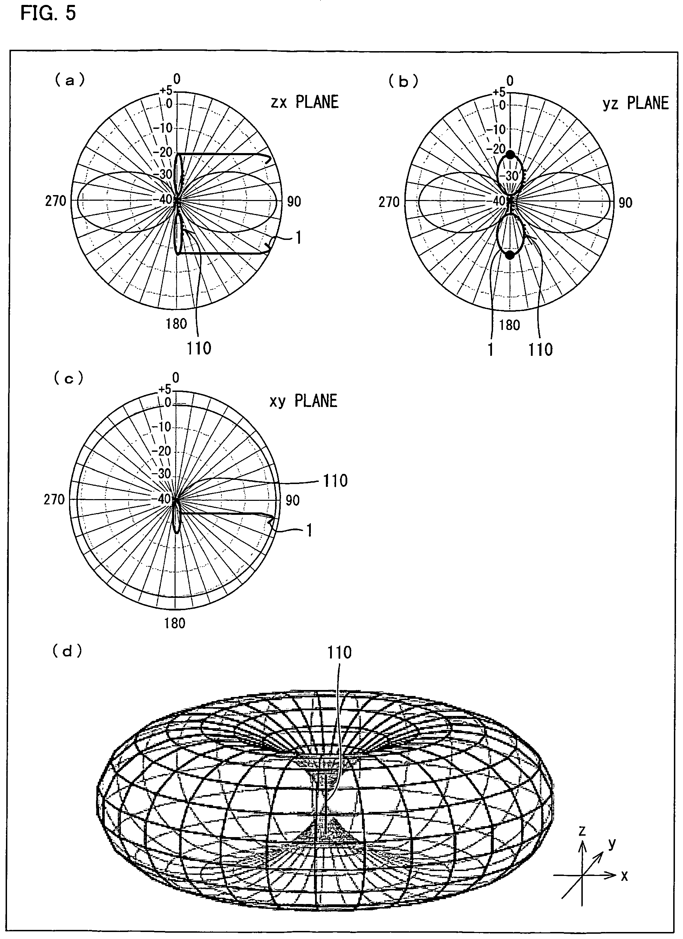

Fig. 5 illustrates an example of a directivity of the antenna 110. (a) of Fig. 5 is a graph illustrating a directivity, on a zx plane, of the antenna 110 of the glasses-type radio communication device 1. (b) of Fig. 5 is a graph illustrating a directivity, on a yz plane, of the antenna 110. (c) of Fig. 5 is a graph illustrating a directivity, on an xy plane, of the antenna 110 of the glasses-type radio communication device 1. (d) of Fig. 5 is a graph three-dimensionally illustrating directivities of the antenna 110.

The antenna 110 shows an 8-shaped directivity extending in a right-left direction (an x-axis direction) in (a) of Fig. 5. The antenna 110 shows an 8-shaped directivity extending in a right-left direction (a y-axis direction) in (b) of Fig. 5. The antenna 110 shows, on the xy plane, a directivity which is uniform in all directions (see (c) of Fig. 5). In a case where these directivities are three-dimensionally shown, the antenna 110 shows a doughnut-shaped directivity which is rotational symmetric with respect to an axis of the antenna 110 (see (d) of Fig. 5).

(a) of Fig. 15 illustrates an example of a case where a monopole antenna 131 is provided in a glasses-type radio communication device in which a frame is made of a non-electric conductor (insulator) such as plastic, as with the glasses-type radio communication device 1 illustrated in Fig. 1. In this case, in order that the monopole antenna 131 operates as an antenna, it is necessary to provide, in a frame provided on a side opposite to a frame in which the monopole antenna 131 is provided (i.e., a frame on a left side in (a) of Fig. 15), a GND having a length of a quarter or more of a wavelength of a communication frequency of the monopole antenna 131. Accordingly, even in a case where a circuit has a size which only necessitates provision of components of the circuit near the bridge 13, it may be necessary to uselessly enlarge a shape of the GND.

In contrast, the glasses-type radio communication device 1 of Embodiment 1 is to be worn on the head of a user, and includes the right and left eyepiece parts 11 and the antenna 110 for carrying out radio communication. The antenna 110 is a dipole antenna including the antenna element 100 and the power feeding section 101 which supplies electric power to the antenna element 100. The power feeding section 101 is provided between the right and left eyepiece parts 11.

Note that "between the right and left eyepiece parts 11" indicates a region sandwiched between the right and left eyepiece parts 11 and naturally encompasses a region coupling the right and left eyepiece parts 11. For example, in a case where the right and left eyepiece parts 11 are integrally provided as so-called goggles, the power feeding section 101 can be provided in a region which couples a part provided in front of the left eye of the user and a part provided in front of the right eye of the user (i.e., a region provided in front of the nose of the user).

With the configuration, in a case where the user wears on his/her head a glasses-type radio communication device 1 which employs a dipole antenna in which the power feeding section 101 of the antenna 110 is provided between the right and left eyepiece parts 11, it is possible that the antenna 110 has a directivity in a front surface direction of the face of the user.

In a case where the user uses the glasses-type radio communication device 1, the user is likely to look in a direction of the television 9 which communicates with the glasses-type radio communication device 1. That is, the television 9 is located in a front surface direction of the user. In a case where the antenna 110 of the glasses-type radio communication device 1 has a directivity in a front surface direction of the face of the user an effect is brought about that it is possible to improve a communication quality.

In a case where the communication quality is improved, a synchronization of the television 9 and the glasses-type radio communication device 1 is facilitated. This also allows a reduction in electric power to be consumed during communicating with the television 9.

In a case where (i) the first antenna element 100a is provided on a side of one of the eyepiece parts 11 (e.g., a right side) and (ii) the second antenna element 100b is provided on a side of the other one of the eyepiece parts 11 (e.g., a left side) (see Fig. 1), it is further possible to provide an antenna without losing a weight balance of the glasses-type radio communication device 1.

The GND 106 can be provided only in the bridge part. Therefore, it is unnecessary to uselessly enlarge the GND 106. This offers an advantage in increase in degree of freedom for design.

### (Modified Example)

Fig. 1 deals with an example in which the antenna element 100 is provided in an upper rim 12. However, the arrangement of the antenna element 100 is not limited to this.

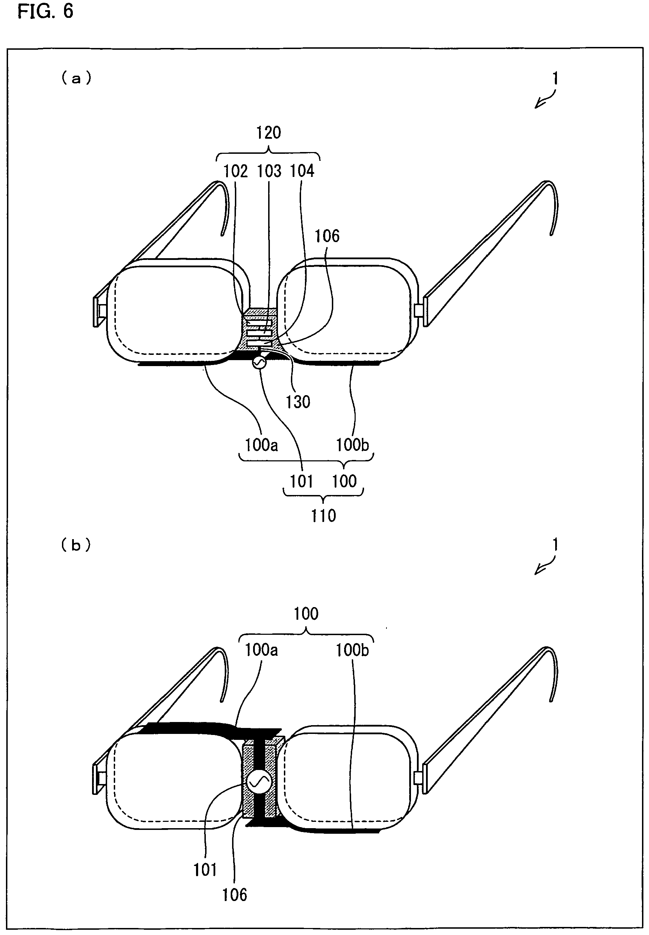

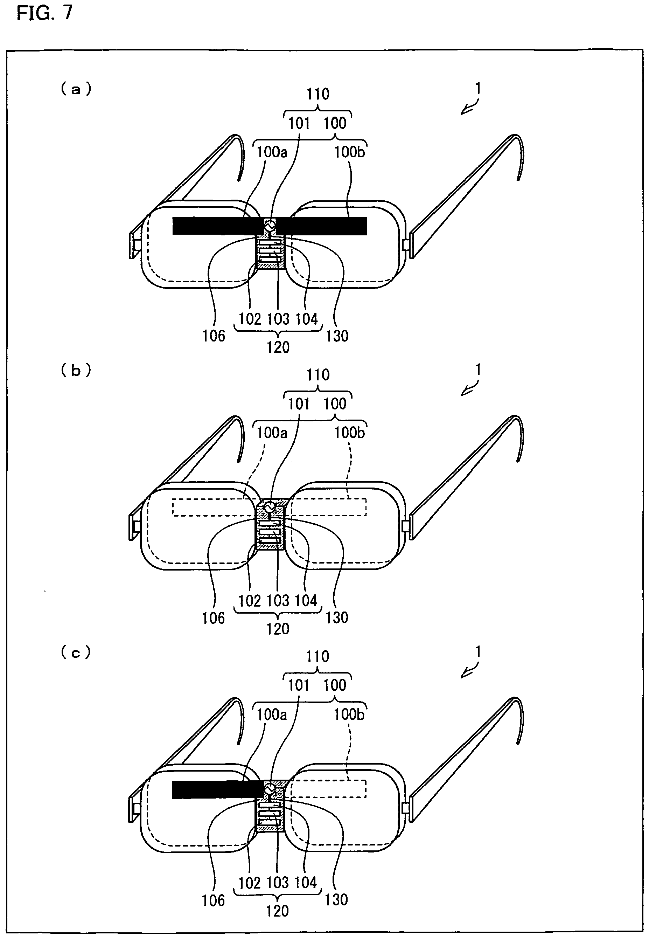

Figs. 6 and 7 each illustrate another example of the internal configuration of the glasses-type radio communication device 1. The glasses-type radio communication device 1 can be configured so that the antenna element 100 (the first antenna element 100a and the second antenna element 100b) is provided in respective lower rims 12 (see (a) of Fig. 6). Alternatively, the glasses-type radio communication device 1 can be configured so that the first antenna element 100a and the second antenna element 100b are provided in a right-upper rim 12 and a left-lower rim 12, respectively, so as to be bilaterally asymmetrical (see (b) of Fig. 6). In that case, polarized wave of the antenna 110 is inclined more largely than that of the antenna 110 illustrated in Fig. 1. Note that (b) of Fig. 6 does not illustrate the power feeding line 130 because the power feeding line 130 is provided on a user side of the power feeding section 101 (i.e., a rear side of (b) of Fig. 6). The circuit section 120 (not illustrated) is connected to the power feeding line 130 and is provided in the GND 106.

The antenna element 100 can be provided on a surface (i.e., on an outer-side surface of a lens) opposite to a surface, of the eyepiece part 11, which faces an eye of the user (see (a) of Fig. 7). Alternatively, the antenna element 100 can be provided on a surface (i.e., on a user-side surface of the lens), of the eyepiece part 11, which surface faces an eye of the user (see (b) of Fig. 7). The glasses-type radio communication device 1 can be configured so that the first antenna element 100a and the second antenna element 100b are provided on an outer-side surface of the lens of the right eyepiece part 11 and on a user-side surface the lens of the left eyepiece part 11, respectively, so as to be bilaterally asymmetrical (see (c) of Fig. 7). Note that, it is preferable that the antenna element 100 of (a) through (c) of Fig. 7 be made of a transparent electric conductor.

As described above, the first antenna element 100a and the second antenna element 100b can be provided along circumferences of the respective right and left eyepiece parts 11. Alternatively, the first antenna element 100a and the second antenna element 100b can be provided on the surfaces of the right and left eyepiece parts 11, respectively. Even in a case where the antenna element 100 is provided in such a manner, it is possible that the antenna of the radio communication device suitably has a directivity in a front surface direction of the face of a user.

Note that, according to Embodiment 1, the antenna element 100 having a shape of a plate is provided. However, the shape of an antenna element 100 is not limited to this. Alternatively, the antenna element 100 can have a shape such as a line shape or a tip-antenna shape.

### [Embodiment 2]

The following description will discuss a second embodiment (Embodiment 2) of the present invention with reference to Figs. 8 through 10.

Embodiment 1 has discussed the glasses-type radio communication device 1 in which the rim 12 and temple 14 are each made of an insulator such as plastic and the bridge 13 is made of an electric conductor such as metal. However, the present invention is not limited to this. For example, the rim 12, the bridge 13, and the temple 14 can be each made of an electric conductor such as metal.

Embodiment 2 will discuss a glasses-type radio communication device (radio communication device) 2 in which a rim 12, a bridge 13, and a temple 14 are each an electric conductor. Note that, according to Embodiment 2, members such as an eyepiece part 11, a rim 12, a bridge 13, a temple 14, an end cover 15, an endpiece 16, a hinge 17, a pad 18, and a pad arm 19 each have a configuration similar to that of Embodiment 1.

### (Internal configuration of glasses-type radio communication device 2)

The following description will discuss an internal configuration of the glasses-type radio communication device 2 with reference to Figs. 8 and 9. Fig. 8 is a view illustrating the internal configuration of the glasses-type radio communication device 2. Fig. 9 is a block diagram illustrating the internal configuration of the glasses-type radio communication device 2 illustrated in Fig. 8.

The glasses-type radio communication device 2 includes an antenna 210, a circuit section 220, and a power feeding line 230 which supplies, to the antenna 210, electric power supplied from the circuit section 220 (see Figs. 8 and 9). Shaded parts in Fig. 8 (i.e., the bridge 13, a lower side of the rim 12, and the temple 14) serve as a GND 206. Note that the GND 206 is not limited to the shaded parts in Fig. 8. The GND 206 can be one of the bridge 13, the rim 12, and the temple 14 or in combination. Alternatively, the GND 206 can be a part of the bridge 13, the rim 12, or the temple 14 (e.g., a lower side of the rim 12).

The circuit section 220 comprehensively controls the glasses-type radio communication device 2. The circuit section 220 includes a power supply section 202, a control section 203, and a radio section 204 and is provided in the bridge 13. Note that, since the circuit section 220 and the power feeding line 230 are members similar to the circuit section 120 and the power feeding line 130 of Embodiment 1, respectively. Therefore, these members are not repeatedly described.

The glasses-type radio communication device 2 is connected to an earphone 208 via the control section 203 and a signal line 207. The earphone 208 converts an electrical signal transmitted from the signal line 207 into an acoustic signal. The earphone 208 includes an earphone 208R provided in a right temple 14 and an earphone 208L provided in a left temple 14. The earphone 208 connects the earphone 208R and the earphone 208L to a signal line 207R and a signal line 207L, respectively.

An electric conductor such as metal (e.g., titanium, a titanium alloy, an aluminum alloy, a magnesium alloy, a nickel chrome alloy, and stainless steel) can be employed as a material of the signal line 207. Note, however, that the material of the signal line 207 is not limited to this.

Note that, according to Embodiment 2, an example is discussed in which the glasses-type radio communication device 2 includes the earphone 208 and the signal line 207. However, the configuration of the glasses-type radio communication device 2 is not limited to this. Alternatively, the glasses-type radio communication device 2 can include no earphone 208 and no signal line 207. Alternatively, the glasses-type radio communication device 2 can include other members.

### (Antenna 210)

The antenna 210 is a half-wavelength dipole antenna which includes an antenna element 200 and a power feeding section 201 which supplies electric power to the antenna element 200 (see Fig. 8).

The antenna element 200 is, for example, an electric conductor such as metal (e.g., titanium, a titanium alloy, an aluminum alloy, a magnesium alloy, a nickel chrome alloy, and stainless steel). The antenna element 200 is a member separate from the members constituting the glasses-type radio communication device 2 (e.g., the rim 12, the bridge 13, and the temple 14).

The power feeding section 201 is provided in the bridge 13. In other words, the power feeding section 201 is provided between right and left eyepiece parts 11. The antenna element 200 is provided on either side of the power feeding section 201 along each circumference of the right and left eyepiece parts 11. The antenna element 200 is made up of (i) a first antenna element 200a which extends from the power feeding section 201 along an upper part of the right eyepiece part 11 and (ii) a second antenna element 200b which extends from the power feeding section 201 along an upper part of the left eyepiece part 11. That is, the first antenna element 200a and the second antenna element 200b are provided so as to make a pair and so as to sandwich the bridge 13 therebetween.

(b) of Fig. 15 illustrates an example of a case where a monopole antenna 132 is provided in a glasses-type radio communication device in which a frame is made of an electric conductor such as metal, as with the glasses-type radio communication device 2 illustrated in Fig. 8. Note that a frame provided in a position in which the monopole antenna 132 is provided is made of a non-electric conductor. In this case, the monopole antenna 132 causes a housing electric current to flow through a glasses-type radio communication device 13b. As indicated by the arrows in (b) of Fig. 15, housing electric currents flow from a power feeding section 133 of the monopole antenna 132 toward respective right and left directions. The housing electric currents flow in respective opposite directions, so as to cancel each other. This causes a deterioration in antenna characteristic. It is necessary to provide a GND having a length of λ/4 or more in the glasses-type radio communication device 13b, where A is a wavelength of a communication frequency of the monopole antenna 132. However, in order to prevent the housing electric currents from cancelling each other, it is necessary not to provide a GND on a right side (i.e., a side of the monopole antenna 132). This causes a reduction in mounting area for components of a circuit. A size of the GND varies depending on a size of the glasses-type radio communication device 13b. It is therefore impossible that the monopole antenna 132 has a unique directivity.

(c) of Fig. 15 illustrates an example of a case where a monopole antenna 134 is provided in a glasses-type radio communication device. In this case, the monopole antenna 134 causes a housing electric current to flow through a glasses-type radio communication device 13c. As indicated by the arrows in (c) of Fig. 15, housing electric currents flow from a power feeding section 135 of the monopole antenna 134 to respective upper and lower rims. The housing electric currents flow in respective opposite directions, so as to cancel each other. This causes a deterioration in antenna characteristic. Moreover, an end part of the antenna, which end part is provided on a side of an open end, comes close to the head of the user. This causes a deterioration in antenna characteristic. According to the glasses-type radio communication device 13c, a GND cannot be provided in a temple on a right side (i.e., a side of the monopole antenna 134). This causes a reduction in area in which a circuit is to be mounted. As with the glasses-type radio communication device 13b, a size of the GND varies depending on a size of the glasses-type radio communication device 13c. It is therefore impossible that the monopole antenna 134 has a unique directivity.

In contrast, according to Embodiment 2, it is possible that the antenna 210 has a directivity in a front surface direction of the face of a user, by providing the antenna element 200 and the power feeding section 201. This allows an improvement in antenna characteristic.

Since an entire frame is metal, the circuit section 220 can be provided in the entire metal frame. This allows an increase in mounting area for the circuit section 220.

### (Modified Example)

Fig. 8 deals with an example in which the circuit section 220 is provided in the bridge 13. However, the arrangement of the circuit section 220 is not limited to this. The circuit section 220 can be provided in the temple 14.

Fig. 10 is a view illustrating an internal configuration of the glasses-type radio communication device (radio communication device) 3. The glasses-type radio communication device 3 includes an antenna 210, a circuit section 320, and a power feeding line 330 via which electric power is supplied from the circuit section 320 to the antenna 210 (see Fig. 10). For convenience, members which have functions identical with those of the glasses-type radio communication device 2 are given identical reference numerals, and are not described repeatedly.

The circuit section 320 includes a power supply section 302, a control section 303, and a radio section 304 and is provided in a temple 14 on a left side. The power feeding line 330 is connected from the circuit section 320 to the power feeding section 201 via a lower part of the rim 12 on a left side.

Note that the arrangement of the circuit section 320 is not limited to this. Alternatively, the circuit section 320 can be provided in a temple 14 on a right side. In that case, the power feeding line 330 is connected from the circuit section 320 provided in the temple 14 on the right side to the power feeding section 201 via a lower part of the rim 12 on a right side.

The antenna element 200 can be provided as illustrated in Figs. 6 and 7. That is, the first antenna element 200a and the second antenna element 200b can be provided along circumferences of the respective right and left eyepiece parts 11. Alternatively, the first antenna element 200a and the second antenna element 200b can be provided on surfaces of the respective right and left eyepiece parts 11. Even in a case where the antenna element 200 is provided in such a manner, it is possible that the antenna of the radio communication device suitably has a directivity in a front surface direction of the face of a user.

### [Embodiment 3]

The following description will discuss a third embodiment (Embodiment 3) of the present invention with reference to Figs. 11 through 13.

According to each of Embodiments 1 and 2, the antenna element is provided separately from the members constituting the glasses-type radio communication device. However, the present invention is not limited to this. The antenna element can be a material identical to that constituting the glasses-type radio communication device. The glasses have a substantially bilaterally symmetrical configuration and the dipole has a substantially symmetrical configuration. This facilitates to constitute a glasses-type radio communication device.

Embodiment 3 will discuss a glasses-type radio communication device (radio communication device) 4 in which an antenna element is constituted by a metal frame (e.g., a rim 12, a bridge 13, and a temple 14). Note that, according to Embodiment 3, members such as eyepiece parts 11, a rim 12, a bridge 13, a temple 14, an end cover 15, an endpiece 16, a hinge 17, a pad 18, and a pad arm 19 each have a configuration similar to that of Embodiment 1.

As to a material of the glasses-type radio communication device 4, as with Embodiment 2, for example, the rim 12, the bridge 13, and the temple 14 can be each made of an electric conductor such as metal.

### (Internal configuration of glasses-type radio communication device 4)

The following description will discuss an internal configuration of the glasses-type radio communication device 4 with reference to Figs. 11 and 12. Fig. 11 is a view illustrating the internal configuration of the glasses-type radio communication device 4. Fig. 12 is a block diagram illustrating the internal configuration of the glasses-type radio communication device 4 illustrated in Fig. 11.

According to the glasses-type radio communication device 4, an entire metal frame operates as an antenna element (see Figs. 11 and 12). A power feeding section 401 of the antenna element is provided between right and left eyepiece parts 11 and on a rim 12 on a right side. The power feeding section 401 supplies electric power to the antenna element (metal frame). The power feeding section 401 and right and left frames which sandwich the power feeding section 401 therebetween constitute a half-wavelength dipole antenna. Note that the power feeding section 401 can be provided between the right and left eyepiece parts 11 and on a rim 12 on a left side.

The glasses-type radio communication device 4 includes (i) a circuit section 420 which is provided in a temple 14L, which is a temple 14 on a left side (ii) and a power feeding line 430 which connects the circuit section 420 with the power feeding section 401. Note that the circuit section 420 and the power feeding line 430 are members similar to the circuit section 120 and the power feeding line 130 of Embodiment 1, respectively. Therefore, these members are not repeatedly described. Note that the circuit section 420 can be provided in a temple 14R, which is a temple 14 on a right side.

The glasses-type radio communication device 4 is connected to an earphone 408 via a control section 403 and a signal line 407. The signal line 407 and the earphone 408 are members similar to the signal line 207 and the earphone 208 of Embodiment 2, respectively. Therefore, these members are not repeatedly described.

As illustrated in Fig. 11, according to the glasses-type radio communication device 4, shaded parts in Fig. 11 (i.e., the bridge 13, a lower side of the rim 12, and the temple 14) serve as a GND 406 (see Fig. 11). Note that the GND 406 is not limited to the shaded parts in Fig. 11. The GND 406 can be one of the bridge 13, the rim 12, and the temple 14 or in combination. Alternatively, the GND 406 can be a part of the bridge 13, the rim 12, or the temple 14 (e.g., a lower side of the rim 12).

The bridge 13 serves as (i) means for connecting right and left configurations so as to reinforce the right and left configurations and (ii) means for carrying out impedance matching of the antenna. The bridge 13 can be used to provide the signal line 407 by which the earphone 408 is connected with the control section 403. The bridge 13 can carry out impedance matching between a circuit and the antenna, by moving an arrangement location of the bridge 13 or adjusting a length of the bridge 13.

According to Embodiment 3, it is possible that the antenna of the glasses-type radio communication device 4 has a directivity in a front surface of the face of a user, by providing the dipole antenna. This allows an improvement in antenna characteristic.

Since the frame is used as an antenna element, it is unnecessary to separately provide a member constituting the antenna element. This allows a reduction in cost.

Since the entire frame is a GND, the circuit section 420 can be provided in the entire frame. This makes it possible to increase a mounting area for the circuit section 420.

By taking advantage of a symmetrical configuration of the glasses, it is possible to constitute elements by the frame itself of the glasses. This prevents a weight balance from being lost.

Although the example is discussed in which almost entire part of the glasses is a metal frame. However, the glasses are not limited to this. Alternatively, it is possible that only a part of the glasses is a metal frame or an entire part of the glasses is a metal frame.

### (Modified Example)

According to the glasses-type radio communication device 4 illustrated in Fig. 11, the entire glasses-type radio communication device 4 serves as a half-wavelength dipole antenna. A total length of the glasses-type radio communication device 4 is λ/2, where λ is a wavelength of a communication frequency of the dipole antenna. This causes a frequency to be used to be uniquely determined. With reference to Fig. 13, the following description will discuss a glasses-type radio communication device which adjusts a length of a part of a frame in accordance with a frequency to be used, which part operates as an antenna, so as to be a length.

Fig. 13 is a view illustrating a glasses-type radio communication device (radio communication device) 5. The glasses-type radio communication device 5 includes filters 501 (see (a) of Fig. 13). The filters 501 are frequency filters, each of which attenuates a signal of a frequency to be used by antenna. Examples of the filters 501 encompass a notch filter, a low pass filter, and a high pass filter. The filters 501 are each provided in an end part of the antenna element which end part is provided on a side opposite to the power feeding section, in a case where a distance between right and left endpieces 16 is λ/2, where λ is a wavelength of a communication frequency in the glasses-type radio communication device 5. That is, the filters 501 are provided at parts of the respective right and left endpieces 16 (see (a) of Fig. 13). In a case where a distance from a position near a center of a rim 12 on a left side to a position near a center of a rim 12 on a right side is λ/2, the filters 501 are provided in center parts of the respective right and left rims 12 (see (b) of Fig. 13).

In a case where the filters 501 are provided in such a manner, an antenna element has a length from the power feeding section to each of the filters 501. This makes it possible to change the length of the antenna in accordance with the frequency to be used by the antenna. This allows the glasses-type radio communication device 5 to carry out communication at an arbitrary frequency.

### [Embodiment 4]

The following description will discuss a fourth embodiment (Embodiment 4) of the present invention with reference to Fig. 14.

Embodiments 1 through 3 each have discussed the glasses-type radio communication device having an appearance of glasses. However, the present invention is not limited to this. For example, the present invention can be configured to be a radio communication device which is to be attached to conventional glasses.

(a) of Fig. 14 is a view illustrating a radio communication device 6 which is a radio communication device to be attached to glasses worn by a user and is a so-called clip-on type radio communication device. The radio communication device 6 illustrated in (a) of Fig. 14 has a clip 601 via which the radio communication device 6 is attached to glasses. Note that the radio communication device 6 illustrated in (a) of Fig. 14 has a configuration identical to those of the glasses-type radio communication devices discussed in Embodiments 1 through 3, except that the radio communication device 6 includes the clip 601 instead of the temple 14. That is, as with the glasses-type radio communication devices of Embodiments 1 and 2, the radio communication device 6 can be configured such that the power feeding section is provided between right and left eyepiece parts 11 and a dipole antenna is provided which has an antenna element separately from a frame. Alternatively, as with the glasses-type radio communication device of Embodiment 3, the radio communication device 6 can be configured to be a dipole antenna in which a frame serves as an antenna element.

(b) of Fig. 14 is a view illustrating a radio communication device 7 to be attached to glasses worn by a user. The radio communication device 7 has a configuration identical to those of the glasses-type radio communication devices discussed in Embodiments 1 through 3, except that a hole 701 through which a temple of the glasses passes is provided on a temple of the radio communication device 7.

Even in a case where the radio communication device has such a shape, it is possible that the antenna suitably has a directivity in a front surface direction of the face of a user, thereby improving an antenna characteristic.

The present invention is not limited to the description of each of the embodiments above, but may be altered by a skilled person in the art within the scope of the claims. An embodiment derived from a proper combination of technical means disclosed in different embodiments is encompassed in the technical scope of the present invention.

### [Summary]

As has been discussed, a radio communication device of the present specification is a radio communication device which is to be worn on the head of a user, includes: right and left eyepiece parts; and an antenna for carrying out radio communication, the antenna being a dipole antenna including an antenna element and a power feeding section which supplies electric power to the antenna element, the power feeding section being provided between the right and left eyepiece parts.

With the configuration, in a case where a user wears on his/her head a radio communication device which employs a dipole antenna in which a power feeding section of an antenna is provided between right and left eyepiece parts, it is possible to cause a directivity of the antenna to be in a front surface direction of the face of the user.

In a case where a user uses a radio communication device, a device which communicates with the radio communication device is likely to be located in a front surface direction of the user. Therefore, in a case where a directivity of an antenna of the radio communication device is caused to be in a front surface direction of the face of the user, it is possible to improve a communication quality.

The radio communication device of the present specification is preferably configured such that: the antenna element is constituted by a first antenna element and a second antenna element; the first antenna element is provided so as to extend from the power feeding section toward a side of one of the right and left eyepiece parts; and the second antenna element is provided so as to extend from the power feeding section toward a side of the other one of the right and left eyepiece parts.

With the configuration, it is possible to provide an antenna without losing a weight balance of the radio communication device.

The radio communication device of the present specification is preferably configured such that: a metal frame which supports the right and left eyepiece parts, the metal frame constituting the antenna element.

With the configuration, it is unnecessary to separately provide a member constituting the antenna element. This allows a reduction in cost.

The radio communication device of the present specification can be configured such that: a filter, which attenuates a signal of a frequency to be used by the antenna, is provided at an end part of the antenna element which end part is provided on a side opposite to the power feeding section.

With the configuration, it is possible to change a length of the antenna in accordance with the frequency to be used by the antenna. This allows the glasses-type radio communication device to carry out communication at an arbitrary frequency.

The radio communication device of the present specification is preferably configured such that: a circuit section which controls communication carried out via the antenna, the circuit section being provided between the right and left eyepiece parts.

With the configuration, a circuit section can be provided between the right and left eyepiece parts without considering a directivity of the antenna.

### Industrial Applicability

The present invention is usable in a production field of three-dimensional glasses, glasses for game, a head mount display, a headset, a radio receiver, an individual identification device, and the like.

### Reference Signs List

1, 2, 4: Glasses-type radio communication device (radio communication device)
11: Eyepiece part
12: Rim
13: Bridge
14: Temple
15: End cover
16: Endpiece
17: Hinge
18: Pad
19: Pad arm
100, 200: Antenna element
(100a, 200a: First antenna element)
(100b, 200b: Second antenna element)
101, 201, 401: Power feeding section
102, 202, 402: Power supply section
103, 203, 403: Control section
104, 204, 404: Radio section
106, 206, 406: GND
110, 210: Antenna
120, 220, 420: Circuit section
130, 230, 430: Power feeding line
207, 407: Signal line
208, 408: Earphone
3: Glasses-type radio communication device (radio communication device)
302: Power supply section
303: Control section
304: Radio section
320: Circuit section
330: Power feeding line
5: Glasses-type radio communication device (radio communication device)
501: Filter
6: Radio communication device
601: Clip
7: Radio communication device
701: Hole
9: Television
90: Antenna

## Claims

1. A radio communication device (1) which is to be worn on the head of a user and which is configured to communicate with a video image device, comprising:
right and left eyepiece parts (11); and
an antenna (110) for carrying out radio communication,
the antenna (110) being a dipole antenna including an antenna element (100) and a power feeding section (101) which supplies electric power to the antenna element (100),
the power feeding section (101) being provided between the right and left eyepiece parts (11),
the antenna element (100) being constituted by a first antenna element (100a) and a second antenna element (100b),
the first antenna element (100a) being provided so as to extend from the power feeding section (101) toward a side of one of the right and left eyepiece parts (11),
the second antenna element (100b) being provided so as to extend from the power feeding section (101) toward a side of the other one of the right and left eyepiece parts (11),
the antenna (110) having a doughnut-shaped directivity which is rotational symmetric with respect to an axis of the antenna (110).

2. The radio communication device (1) as set forth in claim 1, wherein:
the antenna element (100) is provided along each circumference of the right and left eyepiece parts (11).

3. The radio communication device (1) as set forth in claim 1 or 2, wherein:
the dipole antenna has a directivity in a front surface direction of the face of the user.

4. The radio communication device (1) as set forth in any one of claims 1 through 3, further comprising:
a metal frame which supports the right and left eyepiece parts (11),
the metal frame constituting the antenna element (100).

5. The radio communication device (1) as set forth in any one of claims 1 through 4, further comprising:
a circuit section (120) which controls communication carried out via the antenna (110),
the circuit section (120) being provided between the right and left eyepiece parts (11).

6. The radio communication device (1) as set forth in claim 1, wherein the video image device is a 3D television, and the radio communication device (1) controls opening and closing of a shutter in the right and left eyepiece parts (11) while synchronizing with the 3D television.

7. The radio communication device (1) as set forth in claim 1, further comprising rims (12) which surround and hold the right and left eyepiece parts (11), respectively, the first antenna element (100a) being provided on an upper side of one of the rims (12) and the second antenna element (100b) being provided on a lower side of the other of the rims (12).

## Patentansprüche

1. Funkkommunikationsvorrichtung (1), die auf dem Kopf eines Benutzers zu tragen ist und die dazu eingerichtet ist, mit einer Videobildvorrichtung zu kommunizieren, aufweisend:
rechte und linke Okularteile (11); und
eine Antenne (110) zur Durchführung der Funkkommunikation, wobei die Antenne (110) eine Dipolantenne ist, die ein Antennenelement (100) und einen Energieversorgungsabschnitt (101) umfasst, der das Antennenelement (100) mit elektrischer Energie versorgt,
der Energieversorgungsabschnitt (101) zwischen dem rechten und dem linken Okularteil (11) vorgesehen ist,
das Antennenelement (100) durch ein erstes Antennenelement (100a) und ein zweites Antennenelement (100b) gebildet wird,
das erste Antennenelement (100a) so vorgesehen ist, dass es sich von dem Energieversorgungsabschnitt (101) zu einer Seite eines der rechten und linken Okularteile (11) erstreckt,
das zweite Antennenelement (100b) so vorgesehen ist, dass es sich von dem Energieversorgungsabschnitt (101) zu einer Seite des anderen der rechten und linken Okularteile (11) erstreckt, und
die Antenne (110) eine Doughnut-förmige Richtcharakteristik aufweist, die in Bezug auf eine Achse der Antenne (110) rotationssymmetrisch ist.

2. Funkkommunikationsvorrichtung (1) wie in Anspruch 1 dargelegt, wobei:
das Antennenelement (100) entlang jedes Umfangs des rechten und linken Okularteils (11) vorgesehen ist.

3. Funkkommunikationsvorrichtung (1) wie in Anspruch 1 oder 2 dargelegt, wobei:
die Dipolantenne eine Richtcharakteristik in Richtung einer vorderseitigen Oberfläche des Gesichts des Benutzers hat.

4. Funkkommunikationsvorrichtung (1) wie in einem der Ansprüche 1 bis 3 dargelegt, ferner aufweisend:
einen Metallrahmen, der den rechten und den linken Okularteil (11) trägt,
wobei der Metallrahmen das Antennenelement (100) bildet.

5. Funkkommunikationsvorrichtung (1) wie in einem der Ansprüche 1 bis 4 dargelegt, ferner aufweisend:
einen Schaltkreisabschnitt (120), der die über die Antenne (110) ausgeführte Kommunikation steuert,
wobei der Schaltkreisabschnitt (120) zwischen dem rechten und dem linken Okularteil (11) vorgesehen ist.

6. Funkkommunikationsvorrichtung (1) wie in Anspruch 1 dargelegt, wobei die Videobildvorrichtung ein 3D-Fernseher ist und die Funkkommunikationsvorrichtung (1) das Öffnen und Schließen eines Verschlusses im rechten und linken Okularteil (11) steuert, während sie mit dem 3D-Fernseher synchronisiert ist.

7. Funkkommunikationsvorrichtung (1) wie in Anspruch 1 dargelegt, ferner aufweisend Randelemente (12), die den rechten bzw. linken Okularteil (11) umgeben und halten, wobei das erste Antennenelement (100a) auf einer Oberseite eines der Randelemente (12) vorgesehen ist und das zweite Antennenelement (100b) auf einer Unterseite des anderen der Randelemente (12) vorgesehen ist.

## Revendications

1. Dispositif de communication radio (1) qui doit être porté sur la tête d'un utilisateur et qui est configuré pour communiquer avec un dispositif d'image vidéo, comprenant :
des parties d'oculaire droite et gauche (11) ; et
une antenne (110) pour réaliser la communication radio,
l'antenne (110) étant une antenne dipôle incluant un élément d'antenne (100) et une section d'alimentation électrique (101) qui alimente en courant électrique l'élément d'antenne (100),
la section d'alimentation électrique (101) étant prévue entre les parties d'oculaire droite et gauche (11),
l'élément d'antenne (100) étant constitué par un premier élément d'antenne (100a) et un deuxième élément d'antenne (100b),
le premier élément d'antenne (100a) étant prévu de manière à s'étendre depuis la section d'alimentation électrique (101) vers un côté de l'une des parties d'oculaire droite et gauche (11),
le deuxième élément d'antenne (100b) étant prévu de manière à s'étendre depuis la section d'alimentation électrique (101) vers un côté de l'autre des parties d'oculaire droite et gauche (11),
l'antenne (110) ayant une directivité en forme d'anneau/de forme torique qui est symétrique en rotation par rapport à un axe de l'antenne (110).

2. Dispositif de communication radio (1) comme présenté dans la revendication 1, dans lequel :
l'élément d'antenne (100) est prévu le long de chaque circonférence des parties d'oculaire droite et gauche (11).

3. Dispositif de communication radio (1) comme présenté dans la revendication 1 ou 2, dans lequel :
l'antenne dipôle a une directivité dans une direction de surface avant du visage de l'utilisateur.

4. Dispositif de communication radio (1) comme présenté dans l'une quelconque des revendications 1 à 3, comprenant en outre :
une monture en métal qui supporte les parties d'oculaire droite et gauche (11),
la monture en métal constituant l'élément d'antenne (100).

5. Dispositif de communication radio (1) comme présenté dans l'une quelconque des revendications 1 à 4, comprenant en outre :
une section de circuit (120) qui commande la communication réalisée via l'antenne (110),
la section de circuit (120) étant prévue entre les parties d'oculaire droite et gauche (11).

6. Dispositif de communication radio (1) comme présenté dans la revendication 1, dans lequel le dispositif d'image vidéo est un téléviseur 3D, et le dispositif de communication radio (1) commande l'ouverture et la fermeture d'un obturateur dans les parties d'oculaire droite et gauche (11) pendant la synchronisation avec le téléviseur 3D.

7. Dispositif de communication radio (1) comme présenté dans la revendication 1, comprenant en outre des bords (12) qui entourent et tiennent les parties d'oculaire droite et gauche (11), respectivement, le premier élément d'antenne (100a) étant prévu sur un côté supérieur de l'un des bords (12) et le deuxième élément d'antenne (100b) étant prévu sur un côté inférieur de l'autre des bords (12).
